# EUROPÄISCHE PATENTSCHRIFT

(11) **EP 0 537 198 B1**
(45) Veröffentlichungstag und Bekanntmachung des Hinweises auf die Patenterteilung: **20.09.1995**
(21) Anmeldenummer: 91911265.6
(22) Anmeldetag: 29.06.1991
(51) Int. Cl.: B24B 55/05, F16B 2/18

(54) **SPANNVORRICHTUNG ZUM FESTSPANNEN EINER SCHUTZHAUBE AM SPANNHALS EINER HANDWERKZEUGMASCHINE**
CLAMPING DEVICE FOR SECURING A PROTECTIVE HOOD TO THE NECK OF A HAND MACHINE-TOOL
DISPOSITIF DE SERRAGE D'UN CAPUCHON PROTECTEUR SUR LE COLLIER DE SERRAGE D'UNE MACHINE-OUTIL MANUELLE

(30) Priorität: 05.07.1990 DE 4021510
(43) Veröffentlichungstag der Anmeldung: 21.04.1993
(73) Patentinhaber: ROBERT BOSCH GMBH, 70442 Stuttgart (DE)
(72) Erfinder: BORST, Erich, D-7022 Leinfelden-Echterdingen 1 (DE)
(86) Internationale Anmeldenummer: DE9100534
(87) Internationale Veröffentlichungsnummer: WO9200834

(56) Entgegenhaltungen:
- EP-A- 0 054 171
- DE-C- 3 638 337
- US-A- 2 915 799

## Beschreibung

Die Erfindung geht aus von einer Spannvorrichtung zum Festspannen einer Schutzhaube am Spannhals einer Handwerkzeugmaschine, insbesondere eines Winkelschleifers oder dergleichen Elektrowerkzeuges, nach der Gattung des Hauptanspruchs.

Es ist eine Spannvorrichtung dieser Art bekannt (DE-OS 35 38 337), bei der jedes Spannbandende einen nach außen abgebogenen Lappen aufweist. Der Spannhebel greift mit einem Ende an einem Übertragungsglied in Form einer Spannschraube an. Hierzu ist der Spannhebel an seinem freien Ende etwa gabelförmig ausgebildet, wobei die beiden Gabelschenkel das Ende der Spannschraube beidseitig umgreifen. Die Spannschraube und beide Gabelschenkel sind von einem Bolzen durchsetzt, der eine Schwenkbarkeit des Spannhebels um die dadurch vorgegebene Schwenkachse in bezug auf das Übertragungsglied und das diesem benachbarte erste Spannbandende zuläßt. Die Spannschraube greift in Axialabstand davon am abgebogenen Lappen des anderen Spannbandendes dadurch an, daß auf dieses Ende eine einstallbare Mutter aufgeschraubt ist, die axial am Lappen dieses zweiten Spannbandendes abgestützt ist. Der Spannhebel ist zwischen der Schwenkachse und dem abgebogenen Lappen am ersten Spannbandende mit einem Umfangsexzenter versehen, der über eine Druckplatte auf den abgebogenen Lappen dieses ersten Spannbandendes drückt. Die Spannkraft wird vom Exzenter des Spannhebels über die Druckplatte auf die beiden abgebogenen Lappen der beiden Spannbandenden übertragen. Nachteilig ist bei dieser Spannvorrichtung, daß bei großer Spannkraft und bei dem gegebenen ungünstigen Hebelarm ein großes Biegemoment auf die abgebogenen Lappen an den beiden Spannbandenden wirkt und diese Lappen verbiegt. Dadurch wird die erforderliche Spannkraft nicht erreicht, so daß der Benutzer mehrfach nachstellen muß. Ein weiterer wesentlicher Nachteil liegt darin, daß eine große Flächenpressung an der Gleitfläche zwischen dem Exzenter des Spannhebels einerseits und der Druckplatte andererseits wirksam ist. Theoretisch liegt in diesem Bereich eine Linienberührung vor. Bei hohen Spannkräften besteht die Gefahr, daß die Oberfläche der Gleitbahn wegen zu hoher Flächenpressung zerstört wird. Die Folge ist ein Eingraben und Festfressen. Der Spannhebel läßt sich dann nur noch mit äußerster Kraftanstrengung betätigen.

### Vorteile der Erfindung

Die erfindungsgemäße Spannvorrichtung mit den kennzeichnenden Merkmalen des Hauptanspruchs hat demgegenüber folgende Vorteile. Es ist ein schnelles und zuverlässiges Spannen durch das zusammenziehende Kniehebelsystem möglich. Die Bedienung ist einfach. Es wird eine sichere Klemmung durch große Klemmkraft gewährleistet. Ein etwaiger Verschleiß und etwaige Verformungen werden vermieden, weil das Spannband auch im Bereich seiner Enden im wesentlichen biegemomentfrei und nur in Umfangsrichtung zugbelastet ist. Mangels eines Verschleißes und mangels etwaiger Verformungen bleibt die Klemmkraft, die im Spannzustand wirkt, konstant, so daß seitens des Benutzers ein etwaiges Nachstellen entfällt. Die Spannvorrichtung ist ferner einfach, kompakt, bedingt nur wenige Einzelteile und ist daher billig. Da keine Elemente mit Gewinde verwendet werden, ist die Spannvorrichtung im übrigen unempfindlich gegen Staub. Sie ist leicht und ohne große Kraftanstrengung, und dabei ohne Hilfswerkzeug oder etwaige Fachkenntnisse, zu handhaben.

Durch die in den Unteransprüchen 2 - 27 aufgeführten Maßnahmen sind vorteilhafte Weiterbildungen und Verbesserungen der im Hauptanspruch angegebenen Spannvorrichtung möglich.

### Zeichnung

Ein Ausführungsbeispiel der Erfindung ist nachfolgend anhand der Zeichnung näher erläutert. Es zeigen:
- Fig. 1: eine schematische Draufsicht einer Schutzhaube mit Spannvorrichtung daran,
- Fig. 2: einen schematischen Schnitt entlang der Linie II-II in Fig. 1 in größerem Maßstab,
- Fig. 3: eine Seitenansicht allein des Spannhebels der Spannvorrichtung in Fig. 1,
- Fig. 4: eine Ansicht des Spannhebels in Pfeilrichtung IV in Fig. 3,
- Fig. 5: einen schematischen Schnitt entlang der Linie V-V in Fig. 4,
- Fig. 6: eine schematische Seitenansicht eines Teils der Spannvorrichtung in Spannstellung und mit gestrichelten Linien in Öffnungsstellung.

### Beschreibung der Ausführungsbeispiele

In den Zeichnungen ist eine Spannvorrichtung 10 gezeigt, die z.B. fest mit einer Schutzhaube 11 verbunden ist und dem Festspannen der Schutzhaube 11 an einem nur schematisch angedeuteten z.B. zylindrischen Spannhals 12 einer nicht weiter gezeigten Handwerkzeugmaschine, insbesondere eines Winkelschleifers od.dgl. Elektrowerkzeuges, dient. Die grundsätzliche Anordnung entspricht z.B. derjenigen gemäß DE-OS 36 38 337, auf die zur Vermeidung von Wiederholungen diesbezüglich verwiesen ist.

Die Spannvorrichtung weist ein insbesondere aus Blech bestehendes Spannband 13 auf, das um einen z.B. halbkreisförmigen Flansch 14 der Schutzhaube 11 herumgeführt und daran z.B. durch Schweißen od.dgl. befestigt ist. Das Spannband 13 ist zu einem nahezu geschlossenen Ring zusammenspannbar, dessen Längsmittelachse 15 etwa mit derjenigen des halbzylindrischen Flansches 14 zusammenfällt. Insofern hat das Spannband 13 Ähnlichkeit mit einer Rohrschelle. Es ist im Bereich beider Enden 16 und 17, die in Umfangsrichtung beabstandet sind, zusammenspannbar. Die Spannvorrichtung 10 weist ferner einen etwa bogenförmig gekrümmten Spannhebel 18 auf, der mit einer Ende 19 um eine Schwenkachse 20 in bezug auf das dortige erste Ende 16 des Spannbandes 13 schwenkbar ist. Die Schwenkachse 20 verläuft etwa parallel zur Längsmittelachse 15 des gespannten Spannbandes 13. Am Spannhebel 18 greift ein Übertragungsglied 21 gelenkig an. Dieses ist als Umfangszugglied ausgebildet und dabei beim gezeigten Ausführungsbeispiel als mehrlagige Lasche, die hier insgesamt drei zueinander parallele, flache Laschen aus Blech aufweist. Dies ist besonders kostengünstig. Bei einem anderen, nicht gezeigten Ausführungsbeispiel besteht das Übertragungsglied 21 statt dessen aus einer einlagigen Lasche oder aus einer solchen, die noch mehr Lagen aufweist.

Das Übertragungsglied 21 greift in Abstand von der Schwenkachse 20 am zweiten Ende 17 des Spannbandes 13 an. Es bewirkt, daß beim Spannen mittels des Spannnebels 18 die beiden Enden 16 und 17 des Spannbandes unter Zusammenspannen dieses in Umfangsrichtung einander genähert werden.

Die Anordnung ist im besonderen so betroffen, daß das Übertragungsglied 21 zusammen mit dem Spannhebel 18 und den beiden Enden 16 und 17 des Spannbandes 13 eine das Spannband 13 beim Spannen zusammenziehende Kniehebelvorrichtung bilden. Einzelheiten dieser sind nachfolgend erläutert.

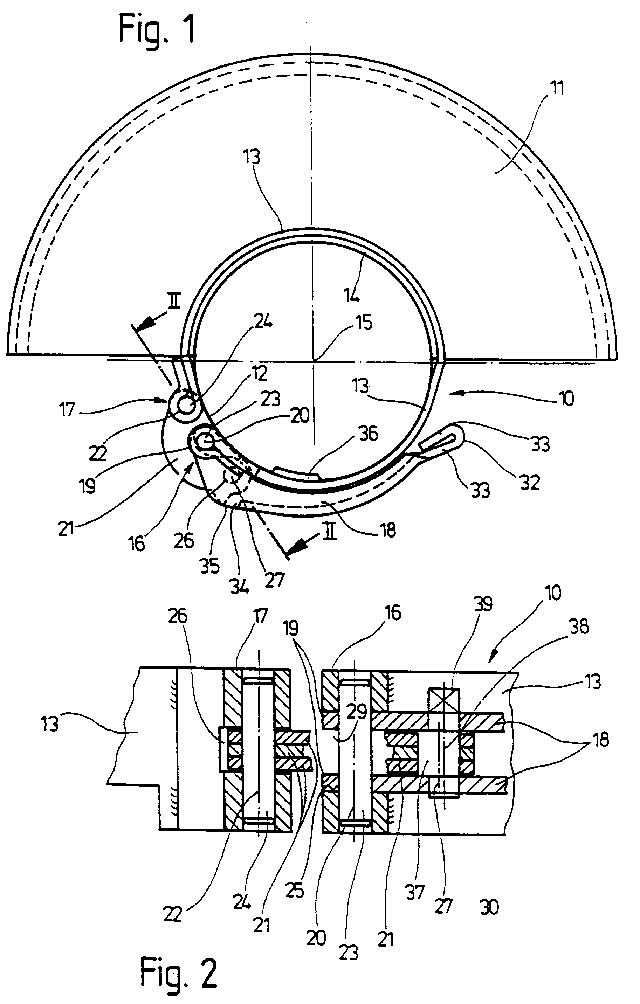

Das Übertragungsglied 21 verbindet den Spannhebel 18 in Umfangsrichtung mit dem zweiten Ende 17 des Spannbandes 13. Zu diesem Zweck ist das Übertragungsglied 21 um eine zur Schwenkachse 20 des Spannhebels 18 etwa parallel verlaufende Schwenkachse 22 schwenkbar am zweiten Ende 17 des Spannbandes 13 gelagert. Der Spannhebel 18 greift mit seinem Ende 19 am ersten Ende 16 des Spannbandes 13 derart gelenkig an, daß der Spannhebel 18 in diesem Bereich um die Schwenkachse 20 schwenkbeweglich ist. Die beiden Enden 16 und 17 des Spannbandes 13 enthalten einen daran befestigten Lagerbolzen 23 bzw. 24, der dort drehfest angebracht ist, z.B. eingepreßt und/oder verstemmt ist. Die beiden Enden 16 und 17 des Spannbandes 13 weisen etwa scharnierartig geformte, z.B. angebogene, Lageraugen auf. Im Bereich dieser Lageraugen befinden sich längsgerichtete Aussparungen 25 bzw. 26. Wie Fig. 2 erkennen läßt, ist die Aussparung 25 im ersten Ende 16 breiter als die Aussparung 26 im zweiten Ende 17. In diese breitere Aussparung 25 greift der Spannhebel 18 ein. Er ist dort auf dem Lagerbolzen 23 schwenkbar gelagert, der entsprechende Bohrungen in seinem Ende 19 durchsetzt.

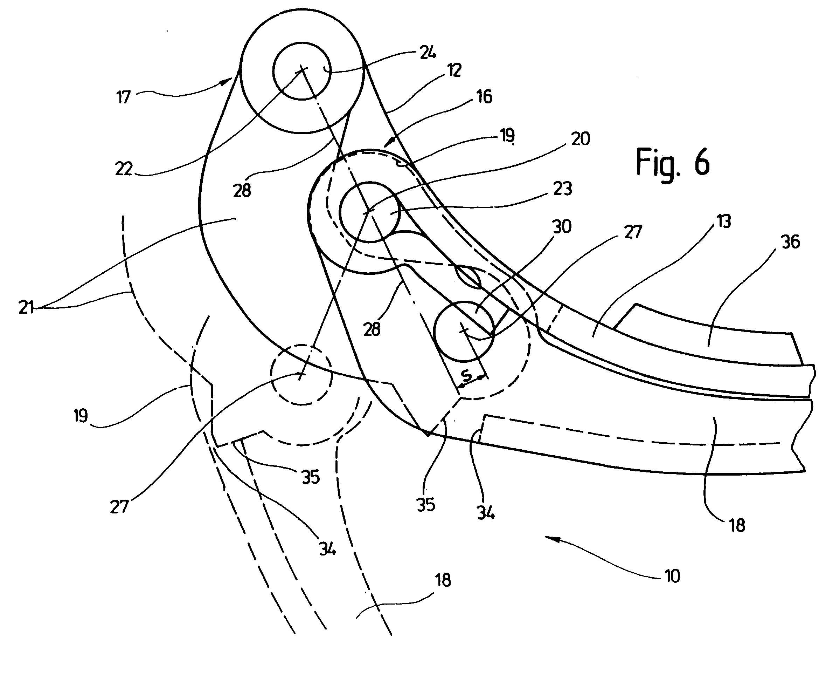

Das Übertragungsglied 21 erstreckt sich, ausgehend von dem zweiten Ende 17 des Spannbandes 13 und der dortigen Schwenkachse 22, in Umfangsrichtung über das erste Ende 16 des Spannbandes 13 und die dortige Schwenkachse 20 hinaus Es ist in Abstand davon um eine Schwenkachse 27 schwenkbar am Spannhebel 18 gelagert. Auch diese Schwenkachse 27 verläuft etwa parallel zu den Schwenkachsen 20 und 22. Diese Schwenkachse 27 ist in bezug auf die Schwenkachsen 20 und 22 besonders plaziert. Dies ist insbesondere anhand von Fig. 6 verdeutlicht. Dort ist eine Gerade 28 als Hilfslinie eingezeichnet, die im gezeigten zusammengezogenen Zustand des Spannbandes 13 die beiden Schwenkachsen 20 und 22 miteinander verbindet. Die Schwenkachse 27 im Spannhebel 18 ist nun so gewählt, daß sie sich in der Spannstellung gemäß Fig. 6 in einem Radialbereich zwischen der Geraden 28 und dem zusammengezogenen Spannband 13 befindet. Der Abstand der Schwenkachse 27 von der Geraden 28, in Radialrichtung nach innen, ist in Fig. 6 mit s eingezeichnet. Er beträgt in der Spannstellung mindestens 2,5 mm. Dadurch ist gewährleistet, daß der Spannhebel 18 in der Spannstellung gemäß Fig. 1 und 6, die in Fig. 6 mit durchgezogenen Linien dargestellt ist, federnd in Radialrichtung nach innen und gegen das Spannband 13 gedrückt und dort sicher gehalten ist. Erreicht ist dadurch, daß beim Spannen durch Schwenken des Spannhebels 18 radial nach innen auf der Geraden 28 eine Spannkraft wirkt, die zusammen mit dem Abstand s ein Drehmoment zur Folge hat, das auf den Spannhebel 18 wirkt. Beim Schließen des Spannhebels 18 wird die gesamte Spannvorrichtung 10 ähnlich einer starken Feder gespannt, wobei beim Überwinden der Totpunktlage der Spannhebel 18 federnd gegen das Spannband 13 gedrückt und dort sicher gehalten wird. Die Bedienung ist also denkbar einfach. Es wird eine sichere Klemmung durch sehr hohe Klemmkraft erreicht. Die Klemmkraft bleibt konstant, so daß ein etwaiges Nachstellen nicht notwendig ist. Im übrigen sind bei der Spannvorrichtung 10 weder Verschleiß noch Verformungen zu verzeichnen, so daß auch deswegen die Klemmkraft konstant bleibt. Die Spannvorrichtung 10 ist einfach, kompakt und billig. Sie benötigt nur wenig Teile. Ein weiterer Vorteil ist ihre Unempfindlichkeit gegen Staub. Die Spannvorrichtung 10 ermöglicht somit ein schnelles und zuverlässiges Spannen der Schutzhaube 11, ohne daß dazu ein besonderes Werkzeug, besondere Routine oder Fachkenntnisse od.dgl. erforderlich sind.

Wie insbesondere Fig. 2 zeigt, greift das dort linke Ende des Übertragungsgliedes 21 in die Aussparung 26 am zweiten Ende 17 des Spannbandes ein. Dort ist dieses Ende auf dem drehfest angeordneten Lagerbolzen 24 um die Schwenkachse 22 schwenkbar gelagert. Der Spannhebel 18 enthält zumindest auf dem Umfangserstreckungsbereich, der von der Schwenkachse 27 bis zum ersten Ende 16 des Spannbandes 13 reicht, in der Mitte ebenfalls eine etwa schlitzförmige Aussparung 29. In diese Aussparung 29 greift das andere Ende des Übertragungsgliedes 21 ein. Es ist dort auf einem Bolzen 30 des Spannhebels 18 schwenkbar gelagert. Zunächst wird davon ausgegangen, daß es sich bei dem Bolzen 30 um einen durchgängig zylindrischen Bolzen handelt, dessen Längsmittelachse mit der Schwenkachse 27 zusammenfällt. Dann hat die Kniehebelvorrichtung ein fest eingestelltes Hebelverhältnis.

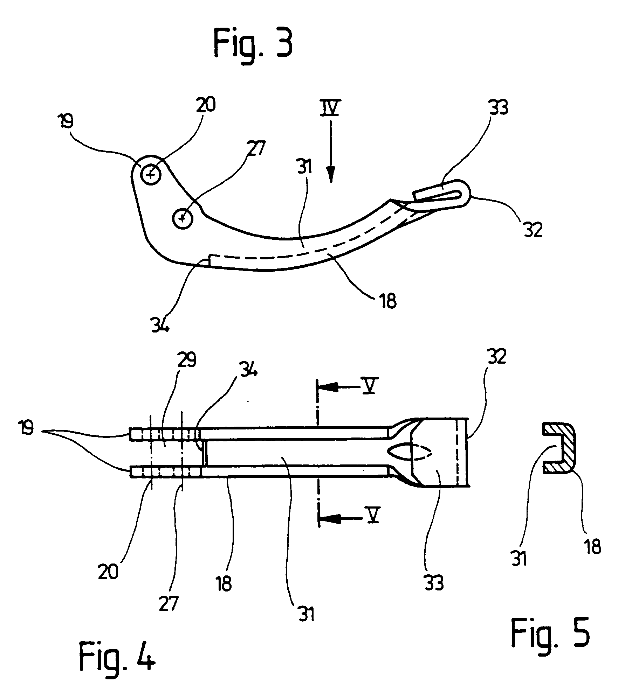

Insbesondere aus Fig. 4 und 5 ist ersichtlich, daß der Spannhebel 18 im Querschnitt etwa U-Profil 31 besitzt, wobei die U-Öffnung in Radialrichtung weist, beim gezeigten Ausführungsbeispiel z.B. nach innen, wodurch sich außen ein glatt durchgehender Spannhebel 18 ergibt. Statt dessen kann die U-Öffnung aber auch in Radialrichtung nach außen weisen. Dieser etwa U-profilförmige Querschnitt erstreckt sich zumindest über etwa drei Viertel der Umfangslänge des Spannhebels 18. Dies verleiht dem Spannhebel 18 eine große Biegesteifigkeit bei geringem Materialeinsatz. Am freien, den Schwenkachsen 20 und 27 gegenüberliegenden Ende ist der Spannhebel 18 mit einer Abrundung 32 versehen, wodurch die Handhabung begünstigt ist und z.B. etwaige Druckstellen beim Betätigen vermieden werden. Die Abrundung 32 ist z.B. dadurch gebildet, daß ein in Verlängerung des Basissteges des U-Profils verlaufender, breiterer Steg 33 endseitig um 180° nach innen umgebogen ist.

Damit der Anwender aus Gründen der Sicherheit keine Möglichkeit hat, die Zuordnung der Größe der Schutzhaube 11 zu einer bestimmten Drehzahl einer nicht weiter gezeigten Handwerkzeugmaschine, z.B. eines Winkelschleifers, durch Aufbiegen des Spannbandes 13 zu umgehen ist Vorkehrung dafür getroffen, daß der Öffnungswinkel des Spannhebels 18 und die Öffnung des Spannbandes 13 begrenzt ist. Hierzu ist am Spannhebel 18 ein Anschlag 34 und diesem zugeordnet am Übertragungsglied 21 ein Anschlag 35 vorgesehen, die in der in Fig. 6 gestrichelt dargestellten Öffnungsstellung des Spannhebels 18 und des Spannbandes 13 unter Begrenzung dieses Öffnungswinkels aneinander anschlagen. Beim Übertragungsglied 21 ist dieser Anschlag 35 aus einem etwa radial abstehenden Vorsprung gebildet. Beim Spannhebel 18 ist dieser Anschlag 34 z.B. an einem inneren Steg gebildet, der z.B. aus dem Basissteg des U-Profils 31 besteht, wobei dann der Anschlag 34 durch die Stirnseite des die Aussparung 29 endseitig begrenzenden Basissteges gebildet wird. Die Anschläge 34 und 35 sind somit bei der Herstellung gleich mit angeformte Bestandteile des Spannhebeis 18 bzw. des Übertragungsgliedes 21 und bedingen daher keinen zusätzlichen Aufwand. Wären die Anschläge 34, 35 nicht vorhanden, könnte beim Öffnen des Spannbandes 13 über die Begrenzung hinaus der Nocken 36 am Spannband 13 und damit die Schutzhaube 11 in jeder beliebigen Stellung aus einer nicht weiter gezeigten Nut im Spannhals 12 demontiert werden und damit die Zuordnung umgangen werden.

Dies wird durch die Anschläge 34,35 mit einfachen Mitteln verhindert.

Nachfolgend ist zunächst von einem zylindrischen Bolzen 30 in den beiden Schenkeln des etwa gabelförmig ausgebildeten Endes 19 des Spannhebels 18 ausgegangen. Prinzipiell ist das Schließmoment am Spannhebel 18 so festgelegt, daß z.B. alle Schutzhaubengrößen für bei Winkelschleifern verwendete Schleifscheiben von z.B. 180 mm Durchmesser bis 350 mm Durchmesser auch bei hoher Belastung verdrehsicher und zuverlässig geklemmt werden können. Dieses Schließmoment am Spannhebel 18 hat eine feste Größe und ist daher wegen der Herstelltoleranzen der einzelnen Elemente einmal abzustimmen. Dies Abstimmung erfolgt z.B. mit dem Übertragungsglied 21, von dem z.B. drei Ausführungen herstellerseitig zur Verfügung stehen, die unterschiedliche Lochabstände bei einer Abstufung z.B. von 0,3 mm aufweisen.

Wie erfindungsgemäß das Schließmoment am Spannhebel 16 einzustellen ist, ist in Fig. 2 dargestellt. Ersichtlich ist dort der Bolzen 30 des Spannhebels 18 als einen mittleren, z.B.rotationssymmetrischen, Exzenterabsatz 37 aufweisender Exzenterbolzen ausgebildet. In dieser Ausführung ist somit das zugeordnete Ende des Übertragungsgliedes 21 um die Schwenkachse 27 schwenkbar auf diesem Exzenterabsatz 37 gelagert. Der Bolzen 30 ist im Spannhebel 18 um die in bezug auf die Schwenkachse 27 exzentrische Drehachse 38 drehverstellbar und in der eingestellten Drehstellung fixierbar gehalten. Der Bolzen 30 ist z.B. an einem Ende mit einer Angriffsfläche 39 versehen, an der zur Einstellung der Exzentrizität durch Drehverstellung um die Drehachse 38 angegriffen werden kann. Die Angriffsfläche 39 besteht z.B. aus einem dargestellten äußeren Vielkant. Bei einem anderen, nicht gezeigten Ausführungsbeispiel ist statt dessen ein innerer Vielkant, z.B. Innensechskant, ein axial eingetiefter Schlitz, Kreuzschlitz od.dgl. vorgesehen. Nach der Einstellung der Exzentrizität ist der Bolzen 30 in der eingestellten Drehstellung in bezug auf den Spannhebel 18 fixierbar, z.B. festspannbar, verstemmbar, verstiftbar oder z.B. anschweißbar.

Bei dieser Ausbildung des Bolzens 30 gemäß Fig. 2 kann also die Abstimmung des Schließmomentes für den Spannhebel 18 durch Verdrehen des Bolzens 30 um die Drehachse 38 und damit durch Verändern der Exzentrizität erfolgen. Damit ist eine stufenlose Einstellung in einfacher Weise möglich.

Eine zusätzliche, nicht gezeigte und vorteilhafte Möglichkeit, das Schließmoment am Spannhebel 18 einzustellen, ergibt sich dadurch, daß die Länge des Spannbandes 13, in Umfangsrichtung gesehen, veränderbar ist und dadurch das Schließmoment am Spannhebel 18 einstellbar ist. Hierzu kann das Spannband 13 an irgendeiner geeigneten Stelle in Umfangsrichtung unterteilt sein. Von Vorteil kann es z.B. sein, wenn die Unterteilungsstelle zwischen dem Spannbandabschnitt, der am Flansch 14 der Schutzhaube 11 fixiert ist, und dem übrigen Spannbandabschnitt, der demgegenüber lose ist, vorgesehen ist. Beide Spannbandabschnitte sind mittels einer Verbindungseinrichtung zusammengehalten, die zur Längenveränderung des Spannbandes 13 einstellbar und in der eingestellten Stellung sicherbar ist. Die Verbindungseinrichtung kann in verschiedenster Weise gestaltet sein. Bei einer Ausführungsform greift die Verbindungseinrichtung praktisch ausschließlich in Umfangsrichtung an den Spannbandabschnitten im Unterteilungsbereich an, wobei die dadurch aufgebrachten Verbindungskräfte praktisch ohne Hebelarm in Umfangsrichtung des Spannbandes und als reine Zugkräfte wirksam sind. Bei einer anderen Ausführungsform sind die Spannbandabschnitte im Unterteilungsbereich z.B. zumindest geringfügig nach außen abgebogen, wobei die abgebogenen Enden von einem Stellglied, z.B. einer Stellschraube, durchsetzt sind, die als Schlitzschraube, Innensechskantschraube od.dgl. ausgebildet sein kann. Die Stellschraube liegt mit ihrem Kopf an einem Ende an. Am Ende des anderen Spannbandabschnittes ist z.B. eine Mutter, Gewindehülse od.dgl. drehfest gehalten, z.B. angeschweißt, in die die Stellschraube eingreift. Die eingestellte Position wird z.B. dadurch gesichert, daß die Stellschraube gegen eine unbeabsichtigte Drehverstellung gesichert wird, entweder im Bereich des Schraubenkopfes oder am anderen Ende, wo die Mutter, Gewindehülse od.dgl. durchsetzt ist. Dort kann z.B. eine Sicherung durch Verstemmen, Schweißen od.dgl. erfolgen. Die Unterteilung des Spannbandes 13 und die Verbindungseinrichtung, die das Spannband zusammenhält, hat den Vorteil, daß das Schließmoment am Spannhebel 18 schnell und einfach und dabei stufenlos eingestellt werden kann, wobei diese Anordnung einfach und kostengünstig ist. Bedarfsweise ist jederzeit eine Nachstellung möglich.

## Patentansprüche

1. Winkelschleiferschutzhaube (11), die eine Spannvorrichtung mit einem im Bereich seiner Enden (16, 17) zusammenspannbaren Spannband (13) und mit einem Spannhebel (18) trägt, die am Spannhals (12) eines Winkelschleifers mittels der Spannvorrichtung befestigbar ist, wobei der Spannhebel (18) mit einem Ende (19) um eine Schwenkachse (29) gegenüber dem ersten Spannbandende (16) schwenkbar ist und an einem Übertragungsglied (21) angreift, dessen Abstand davon am zweiten Ende (17) des Spannbandes (13) angreift und beim Spannen die Spannbandenden (16, 17) einander nähert, dadurch gekennzeichnet, daß das Übertragungsglied (21), der Spannhebel (18) und die Enden (16, 17) des Spannbandes (13) eine das Spannband (13) beim Spannen im Endbereich im wesentlichen biegemomentfrei zusammenziehende Kniehebelvorrichtung bilden, wobei das Übertragungsglied (21) den Spannhebel (18) in Umfangsrichtung mit dem zweiten Ende (17) des Spannbandes (13) verbindet, und wobei das Übertragungsglied (21) sich von dem zweiten Ende (17) des Spannbandes (13) und der dortigen Schwenkachse (22) ausgehend in Umfangsrichtung über das erste Ende (16) des Spannbandes (13) hinaus erstreckt und im Abstand davon schwenkbar am Spannhebel (18) gelagert ist, und wobei ein das Übertragungsglied (21) mit dem Spannhebel (18) scharnierartig koppelnder Bolzen (30) als von außen drehverstellbarer Exzenterbolzen ausgestaltet ist, der einen Exzenterabsatz (37) aufweist, auf dem das Ende des Übertragungsgliedes (21) schwenkbar gelagert ist.

2. Winkelschleiferschutzhaube nach Anspruch 1, **dadurch gekennzeichnet**, daß der Spannhebel (18) mit seinem Ende (19) am ersten Ende (16) des Spannbandes (13) um eine zu dessen Längsmittelachse (15) etwa parallele Schwenkachse (20) schwenkbar gelagert ist.

3. Winkelschleiferschutzhaube nach einem der Ansprüche 1 - 2, **dadurch gekennzeichnet**, daß das Übertragungsglied (21) um eine zur Schwenkachse (20) des Spannhebels (18) etwa parallele Achse (22) schwenkbar am zweiten Ende (17) des Spannbandes (13) gelagert ist.

4. Winkelschleiferschutzhaube nach einem der Ansprüche 1 - 3, **dadurch gekennzeichnet**, daß die Schwenkachse (27), um die das Übertragungsglied (21) schwenkbar am Spannhebel (18) gelagert ist, in der Spannstellung sich in einem Radialbereich zwischen dem zusammengezogenen Spannband (13) und einer Geraden (28) befindet, die die am ersten Ende (16) des Spannbandes (13) gebildete Schwenkachse (20) mit der Schwenkachse (22) verbindet, die am zweiten Ende (17) des Spannbandes (13) gebildet ist.

5. Winkelschleiferschutzhaube nach Anspruch 4, **dadurch gekennzeichnet**, daß der Radialabstand (s) der Schwenkachse (27), um die das Übertragungsglied (21) schwenkbar am Spannhebel (18) gelagert ist, von der Geraden (28) mindestens 2,5 mm beträgt.

6. Winkelschleiferschutzhaube nach einem der Ansprüche 1 - 5, **dadurch gekennzeichnet**, daß die beiden Enden (16,17) des Spannbandes (13) jeweils etwa scharnierartig geformte, z.B. angebogene, Lageraugen aufweisen.

7. Winkelschleiferschutzhaube nach einem der Ansprüche 1 - 6, **dadurch gekennzeichnet**, daß die beiden Enden (16,17) des Spannbandes (13), insbesondere die Lageraugen, in ihrer Mitte längsverlaufende Aussparungen (25,26) aufweisen.

8. Winkelschleiferschutzhaube nach einem der Ansprüche 1 - 7, **dadurch gekennzeichnet**, daß die beiden Enden (16,17) des Spannbandes (13), insbesondere die Lageraugen, einen daran befestigten Lagerbolzen (23, 24) enthalten.

9. Winkelschleiferschutzhaube nach Anspruch 7 oder 8, **dadurch gekennzeichnet**, daß das eine Ende des Übertragungsgliedes (21) in die Aussparung (26) des zweiten Endes (17) des Spannbandes (13) eingreift und dort auf dem Lagerbolzen (24) schwenkbar gelagert ist.

10. Winkelschleiferschutzhaube nach einem der Ansprüche 1 - 9, **dadurch gekennzeichnet**, daß der Spannhebel (18) zumindest auf seinem Umfangserstreckungsbereich, der von dessen Schwenkachse (27) bis zum ersten Ende (16) des Spannbandes (13) reicht, in der Mitte eine längsgerichtete Aussparung (29) enthält, in die das andere Ende des Übertragungsgliedes (21) eingreift.

11. Winkelschleiferschutzhaube nach Anspruch 10, **dadurch gekennzeichnet**, daß das Übertragungsglied (21) mit diesem eingreifenden Ende auf einem Bolzen (30, 37) des Spannhebels (18) schwenkbar gelagert ist.

12. Winkelschleiferschutzhaube nach Anspruch 1, **dadurch gekennzeichnet**, daß der Exzenterbolzen einen mittleren, z.B. rotationssymmetrischen, Exzenterabsetz (37) aufweist, auf dem das Ende des Übertragungseliedes (21) schwenkbar gelagert ist.

13. Winkelschleiferschutzhaube nach Anspruch 1 oder 12, **dadurch gekennzeichnet**, daß der Exzenterbolzen an einem Bolzenende eine Angriffsfläche (39) zur Einstellung der Exzentrizität durch Drehverstellung, z.B. einen äußeren oder inneren Vielkant, einen axial eingetieften Schlitz, Kreuzschlitz od.dgl. aufweist.

14. Winkelschleiferschutzhaube nach einem der Ansprüche 1- 13, **dadurch gekennzeichnet**, daß der Exzenterbolzen nach Einstellung der Exzentrizität in seiner eingestellten Drehstellung in bezug auf den Spannhebel (18) fixierbar ist, z.B. festspannbar, verstemmbar, verstiftbar oder anschweißbar ist.

15. Winkelschleiferschutzhaube nach einem der Ansprüche 7 - 14, **dadurch gekennzeichnet**, daß die Aussparung (25) im ersten Ende (16) des Spannbandes (13) breiter als diejenige (26) im zweiten Ende (17) des Spannbandes (13) bemessen ist und daß in diese breitere Aussparung (25) der Spannhebel (18) mit seinem Ende (19) eingreift und dort auf dem Lagerbolzen (23) schwenkbar gelagert ist.

16. Winkelschleiferschutzhaube einem der Ansprüche 1 - 15, **dadurch gekennzeichnet**, daß das Übertragungsglied (21) als Umfangszugglied ausgebildet ist.

17. Winkelschleiferschutzhaube nach einem der Ansprüche 1 - 16, **dadurch gekennzeichnet**, daß das Übertragungsglied (21), insbesondere das Umfangszugglied, als einlagige oder mehrlagige Lasche ausgebildet ist.

18. Winkelschleiferschutzhaube nach einem der Ansprüche 1 - 17, **dadurch gekennzeichnet**, daß der Spannhebel (18) bogenförmig gekrümmt ist.

19. Winkelschleiferschutzhaube nach einem der Ansprüche 1 - 18, **dadurch gekennzeichnet**, daß der Spannhebel (18) im Querschnitt etwa U-Profil (31) aufweist, dessen U-Öffnung in Radialrichtung, z.B. nach innen, weist.

20. Winkelschleiferschutzhaube nach Anspruch 19, **dadurch gekennzeichnet**, daß sich der etwa U-profilförmige Querschnitt zumindest über etwa drei Viertel der Umfangslänge des Spannhebels (18) erstreckt.

21. Winkelschleiferschutzhaube nach einem der Ansprüche 1 - 20, **dadurch gekennzeichnet**, daß der Spannhebel (18) am freien abstehenden Ende eine Abrundung (32) aufweist, z.B. endseitig um 180° umgebogen ist.

22. Winkelschleiferschutzhaube nach Anspruch 1, **dadurch gekennzeichnet**, daß am Spannhebel (18) einerseits und am Übertragungsglied (21) andererseits Anschläge (34 bzw. 35) vorgesehen sind, die in der Öffnungsstellung des Spannhebels (18) und des Spannbandes (13) unter Begrenzung dieses Öffnungswinkels aneinander anschlagen.

23. Winkelschleiferschutzhaube nach Anspruch 22, **dadurch gekennzeichnet**, daß das Übertragungsglied (21) einen etwa radial abstehenden Vorsprung als Anschlag (35) aufweist.

24. Winkelschleiferschutzhaube nach Anspruch 22 oder 23, **dadurch gekennzeichnet**, daß der Anschlag (34) des Spannhebels (18) an einer inneren, z.B. dessen endseitige Aussparung (29) begrenzenden, Steg gebildet ist, insbesondere am Basissteg eines U-Profils (31).

25. Winkelschleiferschutzhaube nach einem der Ansprüche 1 - 24, **dadurch gekennzeichnet**, daß der beim Übertragungsglied (21) vorgesehene Lochabstand zwischen der einen Schwenkachse (22) und der anderen Schwenkachse (27) zur Einstellung des Schließmoments am Spennhebel (18) veränderbar ist, z.B. des Übertragungsglied (21) gegen ein solches mit anderem Lochabstand austauschbar ist.

26. Winkelschleiferschutzhaube nach einem der Ansprüche 1 - 25, **dadurch gekennzeichnet**, daß die Länge des Spannbandes (13), in Umfangsrichtung gesehen, veränderbar und dadurch das Schließmoment am Spannhebel (18) einstellbar ist.

27. Winkelschleiferschutzhaube nach Anspruch 26, **dadurch gekennzeichnet**, daß das Spannband (13) in Umfangsrichtung unterteilt und mittels einer Verbindungseinrichtung zusammengehalten ist, die zur Längenveränderung des Spannbandes (13) einstellbar und in der eingestellten Stellung sicherbar ist.

## Claims

1. Angle grinder protective hood (11) which carries a clamping device with a clamping strap (13) which can be clamped together in the region of its ends (16, 17), and with a clamping lever (18) which can be fastened to the clamping neck (12) of an angle grinder by means of the clamping device, the clamping lever (18) being pivotable at one end (19) about a pivot axis (29) opposite the first clamping-strap end (16) and engaging on a transmission member (21) which engages at a distance from it on the second end (17) of the clamping strap (13) and which, during clamping, brings the clamping-strap ends (16, 17) nearer to one another, characterised in that the transmission member (21), the clamping lever (18), and the ends (16, 17) of the clamping strap (13) form a toggle-lever device which, during clamping, contracts the clamping strap (13) in the end region in a manner essentially free of any bending moment, the transmission member (21) connecting the clamping lever (18) in the circumferential direction to the second end (17) of the clamping strap (13), and the transmission member (21), starting from the second end (17) of the clamping strap (13) and the pivot axis (22) located there, extending in the circumferential direction beyond the first end (16) of the clamping strap (13) and being mounted at a distance from the latter pivotably on the clamping lever (18), and a bolt (30), which couples the transmission member (21) to the clamping lever (18) in a hinge-like manner, being designed as an eccentric bolt which can be adjusted by rotation from outside and which has an eccentric step (37), on which the end of the transmission member (21) is mounted pivotably.

2. Angle grinder protective hood according to Claim 1, characterised in that the clamping lever (18) is mounted at its end (19) on the first end (16) of the clamping strap (13) so as to be pivotable about a pivot axis (20) approximately parallel to the longitudinal mid-axis (15) of the latter.

3. Angle grinder protective hood according to either of Claims 1 and 2, characterised in that the transmission member (21) is mounted on the second end (17) of the clamping strap (13) so as to be pivotable about an axis (22) approximately parallel to the pivot axis (20) of the clamping lever (18).

4. Angle grinder protective hood according to one of Claims 1 to 3, characterised in that the pivot axis (27), about which the transmission member (21) is mounted pivotably on the clamping lever (18), is located, in the clamping position, in the radial region between the contracted clamping strap (13) and a straight line (28) which connects the pivot axis (20) formed at the first end (16) of the clamping strap (13) to the pivot axis (22) which is formed at the second end (17) of the clamping strap (13).

5. Angle grinder protective hood according to Claim 4, characterised in that the radial distance (s) between the pivot axis (27), about which the transmission member (21) is mounted pivotably on the clamping lever (18), and the straight line (28) amounts to at least 2.5 mm.

6. Angle grinder protective hood according to one of Claims 1 to 5, characterised in that the two ends (16, 17) of the clamping strap (13) have respectively bearing lugs shaped in an approximately hinge-like manner, for example bent down.

7. Angle grinder protective hood according to one of Claims 1 to 6, characterised in that the two ends (16, 17) of the clamping strap (13), especially the bearing lugs, have longitudinally extending recesses (25, 26) in their middle.

8. Angle grinder protective hood according to one of Claims 1 to 7, characterised in that the two ends (16, 17) of the clamping strap (13), especially the bearing lugs, contain a bearing bolt (23, 24) fastened thereto.

9. Angle grinder protective hood according to Claim 7 or 8, characterised in that one end of the transmission member (21) engages into the recess (26) of the second end (17) of the clamping strap (13) and is pivotably mounted there on the bearing bolt (24).

10. Angle grinder protective hood according to one of Claims 1 to 9, characterised in that the clamping lever (18) contains in the middle, at least on its region of circumferential extension which extends from its pivot axis (27) as far as the first end (16) of the clamping strap (13), a longitudinally directed recess (29), into which the other end of the transmission member (21) engages.

11. Angle grinder protective hood according to Claim 10, characterised in that the transmission member (21) is pivotably mounted by means of this engaging end on a bolt (30, 37) of the clamping lever (18).

12. Angle grinder protective hood according to Claim 11, characterised in that the eccentric bolt has a middle, for example rotationally symmetrical eccentric step (37), on which the end of the transmission member (21) is mounted pivotably.

13. Angle grinder protective hood according to Claim 11 or 12, characterised in that the eccentric bolt has at one bolt end an engagement face (39) for setting the eccentricity by rotational adjustment, for example an outer or inner polygon, an axially recessed slot, cross slot or the like.

14. Angle grinder protective hood according to one of Claims 1 to 13, characterised in that, after the setting of the eccentricity, the eccentric bolt can be fixed in the set rotary position in respect of the clamping lever (18), for example clamped, caulked, pinned or welded on.

15. Angle grinder protective hood according to one of Claims 7 to 14, characterised in that the recess (25) in the first end (16) of the clamping strap (13) is made wider than that (26) in the second end (17) of the clamping strap (13), and in that the clamping lever (18) engages with its end (19) into this wider recess (25) and is pivotably mounted there on the bearing bolt (23).

16. Angle grinder protective hood according to one of Claims 1 to 15, characterised in that the transmission member (21) is designed as a circumferential tension member.

17. Angle grinder protective hood according to one of Claims 1 to 16, characterised in that the transmission member (21), especially the circumferential tension member, is designed as a single-layer or multi-layer link.

18. Angle grinder protective hood according to one of Claims 1 to 17, characterised in that the clamping lever (18) is arcuately curved.

19. Angle grinder protective hood according to one of Claims 1 to 18, characterised in that the clamping lever (18) has, in cross-section, an approximately U-shaped profile (31), the U-orifice of which points in the radial direction, for example inwards.

20. Angle grinder protective hood according to Claim 19, characterised in that the cross-section approximately in the form of a U-shaped profile extends at least over approximately three quarters of the circumferential length of the clamping lever (18).

21. Angle grinder protective hood according to one of Claims 1 to 20, characterised in that the clamping lever (18) has a rounding (32) at the free projecting end, for example is bent round through 180° at the end.

22. Angle grinder protective hood according to Claim 1, characterised in that there are provided on the clamping lever (18) on the one hand and on the transmission member (21) on the other hand stops (34 and 35) which, in the opening position of the clamping lever (18) and of the clamping strap (13), butt against one another, thereby limiting this opening angle.

23. Angle grinder protective hood according to Claim 22, characterised in that the transmission member (21) has as a stop (35) a projection projecting approximately radially.

24. Angle grinder protective hood according to Claim 22 or 23, characterised in that the stop (34) of the clamping lever (18) is formed on an inner web, for example limiting its end recess (29), especially on the base web of a U-shaped profile (31).

25. Angle grinder protective hood according to one of Claims 1 to 24, characterised in that the hole spacing provided on the transmission member (21) between one pivot axis (22) and the other pivot axis (27) is variable for setting the closing moment on the clamping lever (18), for example the transmission member (21) is exchangeable for one with another hole spacing.

26. Angle grinder protective hood according to one of Claims 1 to 25, characterised in that the length of the clamping strap (13), as seen in the circumferential direction, is variable and the closing moment on the clamping lever (18) can therefore be set.

27. Angle grinder protective hood according to Claim 26, characterised in that the clamping strap (13) is subdivided in the circumferential direction and is held together by means of a connecting device which can be set for the variation in length of the clamping strap (13) and which can be secured in the set position.

## Revendications

1. Capot de protection de meuleuse d'angle (11), muni d'un dispositif de serrage composé d'une bande de serrage (13) dont les extrémités (16, 17) peuvent être resserrées, ainsi que d'un levier de serrage (18), ce capot se fixant au col de serrage (12) d'une meuleuse d'angle par l'intermédiaire du dispositif de serrage, le levier de serrage (18) pouvant pivoter par une extrémité (19) autour d'un axe de pivotement (29) par rapport à la première extrémité de la bande de serrage (16) et agissant sur un organe de transmission (21) dont l'écartement agit sur la seconde extrémité (17) de la bande de serrage (13) et rapproche les extrémités de bande (16, 17) lors du serrage, caractérisé en ce que l'organe de transmission (21), le levier de serrage (18) et les extrémités (16, 17) de la bande de serrage (13) forment un dispositif de levier à genouillère qui resserre la bande de serrage (13) au niveau de la zone d'extrémité, d'une manière essentiellement libre de couple, l'organe de transmission (21) reliant le levier de serrage (18), dans la direction périphérique, avec la seconde extrémité (17) de la bande de serrage (13), tandis que l'organe de transmission (21) s'étend à partir de la seconde extrémité (17) de la bande de serrage (13) et de l'axe de pivotement (22) correspondant, en partant, dans la direction périphérique, au-delà de la première extrémité (16) de la bande de serrage (13), et est monté de manière pivotante à une certaine distance, sur le levier de serrage (18), et tandis qu'un goujon (30) qui relie l'organe de transmission (21) au levier de serrage (18) à la manière d'une charnière, est en forme de goujon à excentrique réglable en rotation de l'extérieur, et comprend un épaulement excentrique (37) portant de manière pivotante l'extrémité de l'organe de transmission (21).

2. Capot de protection de meuleuse d'angle selon la revendication 1, caractérisé en ce que le levier de serrage (18) est monté pivotant par son extrémité (19) à la première extrémité (16) de la bande de serrage (13), autour d'un axe de pivotement (20) sensiblement parallèle à l'axe longitudinal médian (15).

3. Capot de protection de meuleuse d'angle selon l'une des revendications 1 et 2, caractérisé en ce que l'organe de transmission (21) est monté pivotant sur la seconde extrémité (17) de la bande de serrage (13), autour d'un axe (22) sensiblement parallèle à l'axe de pivotement (20) du levier de serrage (18).

4. Capot de protection de meuleuse d'angle selon l'une des revendications 1 à 3, caractérisé en ce que l'axe de pivotement (27) recevant de manière pivotante l'organe de transmission (21) sur le levier de serrage (18), se trouve en position de serrage, dans une zone radiale entre la bande de serrage (13), resserrée, et une droite (28) reliant l'axe de pivotement (20) formé à la première extrémité (16) de la bande de serrage (13), avec l'axe de pivotement (22) formé à la seconde extrémité (17) de la bande de serrage (13).

5. Capot de protection de meuleuse d'angle selon la revendication 4, caractérisé en ce que l'écartement radial (s) de l'axe de pivotement (27) autour duquel est monté pivotant l'organe de transmission (21) sur le levier de serrage (18), par rapport à la droite (28), est au moins égal à 2,5 mm.

6. Capot de protection de meuleuse d'angle selon l'une des revendications 1 à 5, caractérisé en ce que les deux extrémités (16, 17) de la bande de serrage (13) présentent respectivement des oeillets de palier sensiblement en forme de charnière, par exemple repliés.

7. Capot de protection de meuleuse d'angle selon l'une des revendications 1 à 6, caractérisé en ce que les deux extrémités (16, 17) de la bande de serrage (13), notamment les oeillets de palier, présentent des découpes (25, 26) longitudinales en leur milieu.

8. Capot de protection de meuleuse d'angle selon l'une des revendications 1 à 7, caractérisé en ce que les deux extrémités (16, 17) de la bande de serrage (13), notamment les oeillets de palier, comportent un goujon de palier (23, 24) fixé dans ces oeillets.

9. Capot de protection de meuleuse d'angle selon la revendication 7 ou 8, caractérisé en ce qu'une extrémité de l'organe de transmission (21) vient prendre dans la cavité (26) de la seconde extrémité (16) de la bande de serrage (13) en y étant montée pivotante sur le goujon de palier (24).

10. Capot de protection de meuleuse d'angle selon l'une des revendications 1 à 9, caractérisé en ce que le levier de serrage (18) qui s'étend au moins au niveau de sa zone d'extension périphérique allant de son axe de pivotement (27) jusqu'à la première extrémité (16) de la bande de serrage (13), comporte en son milieu une cavité (29) longitudinale dans laquelle vient prendre l'autre extrémité de l'organe de transmission (21).

11. Capot de protection de meuleuse d'angle selon la revendication 10, caractérisé en ce que l'organe de transmission (21) est monté pivotant, par son extrémité venant prendre dans cet organe, sur un goujon (30, 37) du levier de serrage (18).

12. Capot de protection de meuleuse d'angle selon la revendication 1, caractérisé en ce que le goujon d'excentrique comporte un décrochement excentrique (37) médian, par exemple à symétrie de rotation, sur lequel l'extrémité de l'organe de transmission (21) est montée de manière pivotante.

13. Capot de protection de meuleuse d'angle selon la revendication 1 ou 12, caractérisé en ce que le goujon excentrique présente à une extrémité une surface d'attaque (39) pour régler l'excentricité par un réglage en rotation, par exemple à l'aide d'un polygone en creux ou en saillie, d'une fente axiale, d'une fente cruciforme ou d'un moyen analogue.

14. Capot de protection de meuleuse d'angle selon l'une des revendications 1 à 13, caractérisé en ce que le goujon à excentrique, après réglage de l'excentricité est bloqué en rotation par rapport au levier de serrage (18), par exemple par un serrage bloquant, un matage, une goupille ou une soudure.

15. Capot de protection de meuleuse d'angle selon l'une des revendications 7 à 14, caractérisé en ce que la cavité (25) à la première extrémité (16) de la bande de serrage (13), est plus large que celle (26) dans la seconde extrémité (17) de la bande de serrage (13), et en ce que dans cette cavité plus large (25) vient prendre le levier de serrage (18) par son extrémité (19) en y étant monté pivotant sur le goujon de palier (23).

16. Capot de protection de meuleuse d'angle selon l'une des revendications 1 à 15, caractérisé en ce que l'organe de transmission (21) est en forme d'organe périphérique.

17. Capot de protection de meuleuse d'angle selon l'une des revendications 1 à 16, caractérisé en ce que l'organe de transmission (21), notamment l'organe de traction périphérique, est en forme de patte à une ou plusieurs couches.

18. Capot de protection de meuleuse d'angle selon l'une des revendications 1 à 17, caractérisé en ce que le levier de serrage (18) est cintré en forme d'arc.

19. Capot de protection de meuleuse d'angle selon l'une des revendications 1 à 18, caractérisé en ce que le levier de serrage (18) a, en section, une forme sensiblement en U (31) dont l'ouverture du U est dirigée dans la direction radiale, par exemple vers l'intérieur.

20. Capot de protection de meuleuse d'angle selon la revendication 19, caractérisé en ce que la section ayant sensiblement la forme d'un U s'étend sur au moins les trois quarts de la longueur périphérique du levier de serrage (18).

21. Capot de protection de meuleuse d'angle selon l'une des revendications 1 à 20, caractérisé en ce que le levier de serrage (18) présente à son extrémité libre en saillie, une partie arrondie (32), par exemple obtenue par le repliage à 180° de l'extrémité.

22. Capot de protection de meuleuse d'angle selon la revendication 1, caractérisé en ce que d'une part le levier de serrage (18) et d'autre part l'organe de transmission (21) comportent des butées (34, 35) qui, en position d'ouverture du levier de serrage (18) et de la bande de serrage (13), viennent buter l'une contre l'autre en limitant l'angle d'ouverture.

23. Capot de protection de meuleuse d'angle selon la revendication 22, caractérisé en ce que l'organe de transmission (21) comporte une saillie sensiblement radiale servant de butée (35).

24. Capot de protection de meuleuse d'ange selon la revendication 22 ou 23, caractérisé en ce que la butée (34) du levier de serrage (18) et formée sur une entretoise intérieure délimitant par exemple sa cavité (29) au niveau de l'extrémité, notamment la branche de base de la section en U (31).

25. Capot de protection de meuleuse d'angle selon l'une des revendications 1 à 24, caractérisé en ce que l'écartement des trous prévu dans l'organe de transmission (21) entre l'axe de pivotement (22) et l'autre axe de pivotement (27) pour régler le couple de fermeture du levier de serrage (18), est variable par exemple l'organe de transmission (21) peut être remplacé par un organe ayant un écartement de trous différent.

26. Capot de protection de meuleuse d'angle selon l'une des revendications 1 à 25, caractérisé en ce que la longueur de la bande de serrage (13), vue dans la direction périphérique, est variable et règle ainsi le couple de fermeture du levier de serrage (18).

27. Capot de protection de meuleuse d'angle selon la revendication 26, caractérisé en ce que la bande de serrage (13) est subdivisée dans la direction périphérique et est maintenue réunie par un dispositif de liaison permettant de régler la longueur de la bande de serrage (13) et de la bloquer dans sa position réglée.
